# EUROPEAN PATENT SPECIFICATION

(11) **EP 0 355 308 B1**
(45) Date of publication and mention of the grant of the patent: **22.09.1993**
(21) Application number: 89111316.9
(22) Date of filing: 21.06.1989
(51) Int. Cl.: B29C 67/14, B29C 53/56

(54) **Fibre placement machine**
Auflegevorrichtung für Fasern
Machine d'application de fibres

(30) Priority: 25.08.1988 US 236417; 02.11.1988 US 265970
(43) Date of publication of application: 28.02.1990
(73) Proprietor: CINCINNATI MILACRON INC., Cincinnati Ohio 45209 (US)
(72) Inventor: Vaniglia, Milo M., Southgate, Kentucky, KY 41071 (US)
(74) Representative: Lally, William

(56) References cited:
- EP-A- 0 198 744
- EP-A- 0 216 748
- EP-A- 0 225 563
- EP-A- 0 241 251
- US-A- 4 420 121
- US-A- 4 699 683

## Description

The invention relates to fibre placement machines which may employ multiple strands or tows of fibre which are pulled from a creel assembly and placed on a surface or workpiece. Such machines may include filament winders, which utilise plural filaments winding rotary shapes.

Fibre placement machines may also be employed to place tows of fibre on flat, curved, or compound contours. Prior art assemblies include filament winding machines which deploy plural relatively parallel filaments on a rotary member, where the filaments pass through a pay-out eye which may be rotated about an axis parallel to the longitudinal path travelled by the filaments to keep the filaments spaced for a variety of winding angles as the paid-out filaments traverse the rotary axis of the member to be wound.

Applicant's assembly is directed to a machine which utilises a creel assembly for supplying filamentous composite material to a laydown surface, where the machine system includes at least a multi-axis manipulator wrist which may orient the laydown tip of the assembly through a wide variety of spatial orientations with respect to the supply creel assembly.

There is described in the specification of our European Patent Specification EP-A-0225563 a fibre placement machine comprising a relatively stationary housing, a fibre supply device on which a plurality of spools of fibre may be mounted supported by the housing, tensioning means for maintaining tension in the fibres, a fibre placement head for applying fibres to a workpiece surface, the fibre placement head being carried by a manipulation wrist extending from the housing whereby the head may be manipulated through multi-spacial orientations, the machine comprising a redirect roller assembly on the housing comprising a plurality of roller elements rotatably about a first axis, and a redirect roller assembly on the head comprising a plurality of roller elements rotatable about two axes.

It is an object of this invention to provide spacing for the fibre tows, preferably with minimal drag, regardless of head orientation.

This object is achieved in accordance with the present invention by the characterisation, that the roller elements on the housing are each carried by a roller base on which the roller element is rotatable about said first axis, and a bearing member provides rotary movement of said base about a second axis transverse to said first axis.

Preferably the roller elements on the head are also each carried by a roller base on which the roller element is rotatable about said first axis, and a bearing member provides rotary movement of said base about a second axis transverse to said first axis.

Preferably means is provided for controlling the manipulator wrist.

The roller assemblies may be unpowered, but preferably power means is provided for driving at least one of the roller assemblies with respect to one swivel axis, such power means preferably being operative to drive the roller base about its respective axis.

Desirably both roller assemblies are motorised.

There will now be given detailed descriptions, to be read with reference to the accompanying drawings, of two fibre placement machines which are the preferred embodiments of this invention, having been selected for the purpose of illustrating the invention by way of example. In the accompanying drawings:
FIGURE 1 is a perspective view of a fibre placement machine;
FIGURE 2 is an elevational view showing the vertical forearm of the fibre placement machine of Figure 1 supporting a fibre placement head;
FIGURE 3 is a close-up elevational view of the fibre placement head of Figure 2;
FIGURE 4 is a section through a redirect roller;
FIGURE 5 is a plan view of the fibre placement head;
FIGURE 6 is a diagrammatic view of the redirect roller pair;
FIGURE 7 is an elevational view showing the vertical forearm of the fibre placement machine of Figure 1, supporting a fibre placement head, having a redirect roller servo drive;
FIGURE 8 is a view showing the redirect roller servo drive, taken along the line 8-8 of Figure 7; and
FIGURE 9 is an end view showing the redirect servo drive, taken along the line 9-9 of Figure 8.

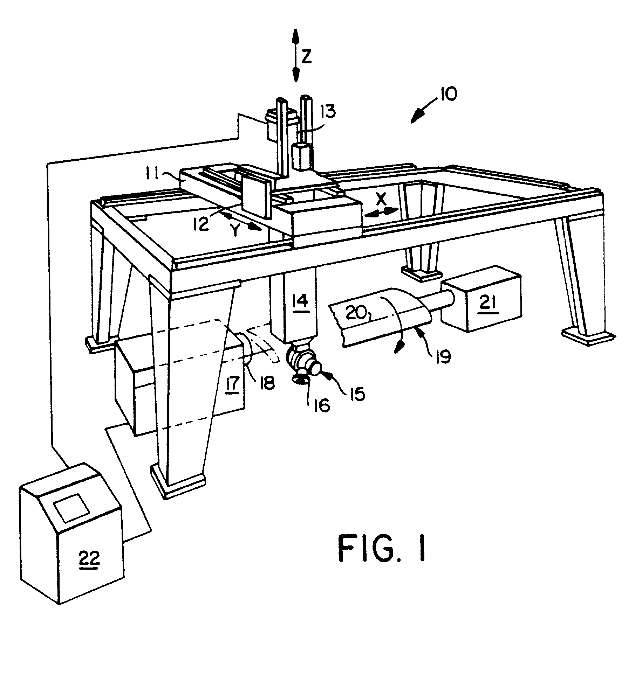

Figure 1 shows a gantry machine or robot 10 having an elevated way system suitable for carrying a carriage 11 and cross-slide 12 in X and Y directions, in a plane parallel to the floor. The cross-slide 12 supports a saddle 13 for vertical movement, and the saddle 13 has a forearm 14 which contains a drive mechanism (not shown) for actuating a wrist 15 supported at the end of the forearm 14. The forearm 14 and wrist 15 are manufacturered substantially as the serial roll wrist depicted in the U.S. Patent 4,068,536, assigned to Cincinnati Milacron Inc., the assignee of the present invention. The gantry robot 10 depicted in Figure 1 is commercially available from Cincinnati Milacron Inc., under the Model No. T3-886 gantry series industrial robot, and other similar mechanisms will suffice.

As described in the aforementioned U.S. Patent, the wrist 15 has the capability of moving a tooling plate 16 in three degrees of rotary motion, and a desired tool assembly, or end effector (not shown), is affixed to the tooling plate 16. It will be appreciated that other wrists, for example, the roll-bend-roll variety of manipulators, may be employed.

A variety of work may be positioned on the floor within the range of the tooling plate 16. The work may be flat or curved; rotating or stationary.

A servo-controlled mandrel unit 17 is shown, having a rotary spindle 18 for positioning an exemplary workpiece, such as an air foil form 19, The mandrel unit 17 is, in effect, a headstock capable of supporting, driving, and positioning work about a reference axis 20, here shown horizontally.

Here it should be noted that a variety of mandrel units and auxiliary footstocks may be suitable for positioning work.

A computer numerical control (CNC) 22 is employed to control the multi-degree-of-freedom spatial positioning of the tooling plate 16 and selected end effector. The CNC 22 also controls the work position about the reference axis 20. One such control is commercially available under the Trade Mark ACRAMATIC - - Model 975-C CNC, from Cincinnati Milacon Inc.

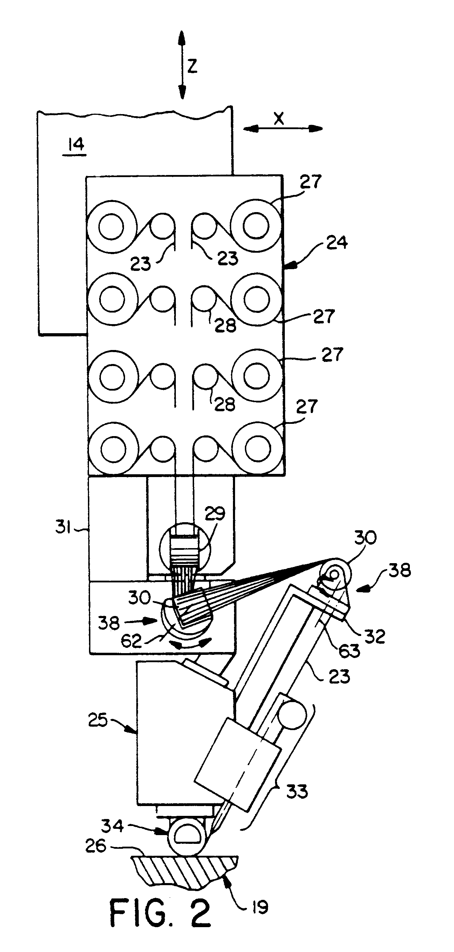

With reference to Figures 1 and 2, the machine 10 is arranged to place long and short lengths of fibre tows 23 on the air foil form 19, for example, in an operation similar to filament winding, but where the tows may extend along concave, or undercut surfaces.

Figure 2 schematically depicts the vertical forearm 14 of Figure 1 with a creel assembly 24 mounted thereto. A fibre placement head 25 is affixed to the wrist tooling plate 16 and is wieldable to approach the workpiece surface 26, it being appreciated by those skilled in the art that the surface may be curved as well as flat, and the surface 26 may move with respect to the fibre placement head 25 and vice-versa. The creel assembly 24 and fibre placement head 25 are thus movable on a common forearm 14 and the wrist 15 provides relative movement between the placement head 25 and the creel assembly 24. The creel assembly 24 is depicted schematically as having eight spools 27 of fibre tows 23, each tow 23 pulled from a spool 27 and trained over a respective tension-maintaining roller 28, in a manner known in the tensioner art, which, basically comprises the use of radially-movable dancer rolls. The eight tows 23 depicted are guided around a grooved roller 29 affixed to the forearm 14, and are then trained around a pair of redirect rollers 30 carried on a creel bracket 31 and an outboard support bracket 32 of the placement head 25. The creel bracket 31 constitutes a relatively-stationary machine member, or base, for referencing movement of the relatively-movable placement head 25 which is moved by the manipulator wrist 15.

The tensioned fibres 23 are arrayed in a flat, ribbon-like fashion, and trained over the rollers 30 - much in the manner that a flat belt is trained over skewed pulleys in a machine drive. However, since the fibres 23 are independent it is necessary to maintain their spacing and prevent fibres from jumping off the rollers 30 if quick head movements cause a fibre 23 to slacken. The redirect rollers 30 are mounted in bearings so that they may swivel and thus be automatically oriented in accordance with tension of the fibre tows 23. The tows 23 are brought through a clamp, cut and restart unit ("CCR unit) 33 and are finally brought around a presser member assembly 34 where they are impressed on the work surface 26.

The details of the CCR unit 33 and presser member assembly 34 do not form part of the present invention.

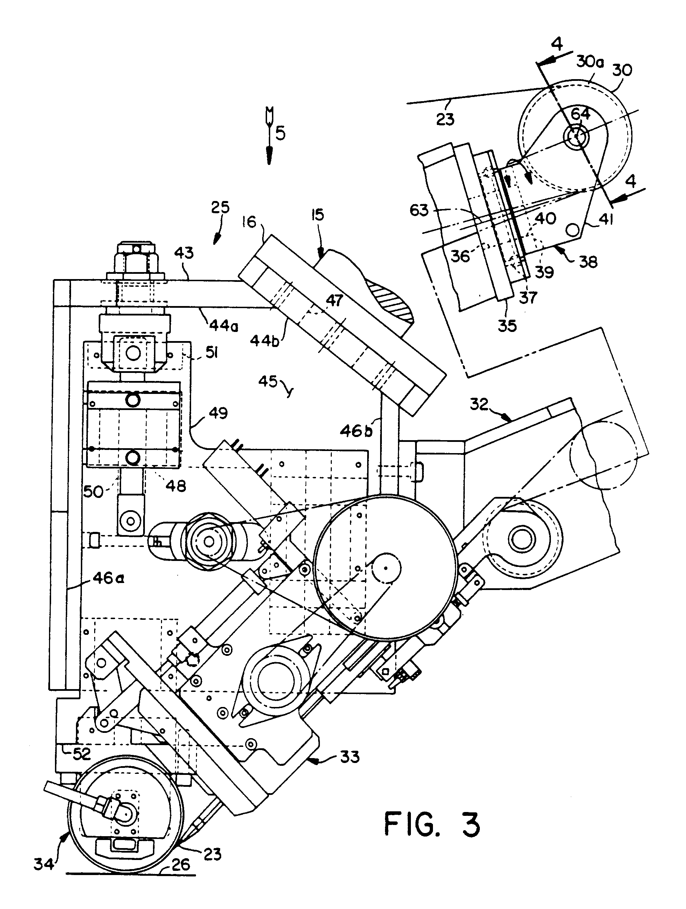

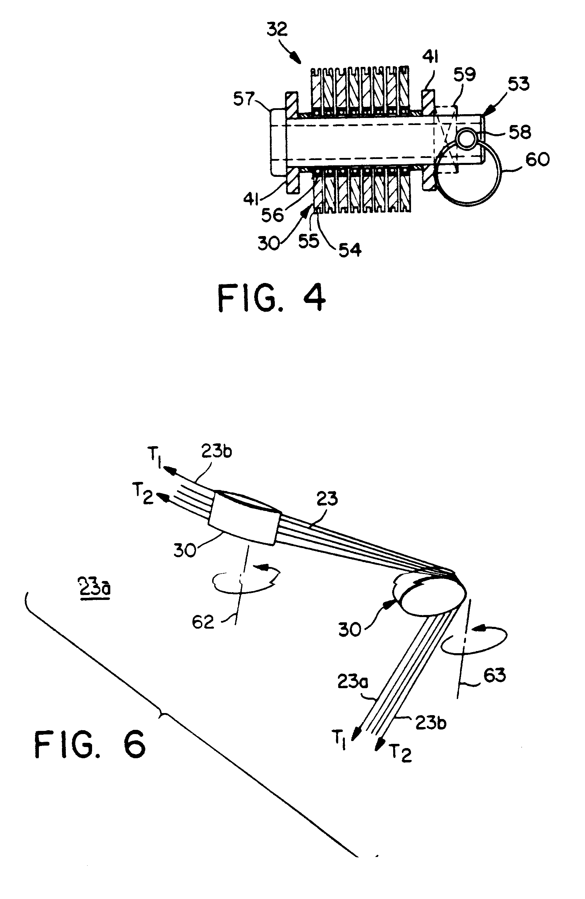

Referring now to Figure 3, the fibre placement head 25 is shown in more detail, affixed to the tooling plate 16 of the wrist 15. The topmost end of the outboard support bracket 32 of the placement head 25 is fabricated of a plate 35 having a through clearance hole 36, and the plate 35 supports an anti-friction bearing 37 which carries the redirect roller assembly 38. The assembly 38 is fabricated from a plate 39, having a through clearance hole 40, and welded parallel side plates 41. The parallel plates 41 captivate the redirect roller 30 which is freely journalled on a tubular support shaft 42 extending through the side plates 41. The fibre tows 23 are depicted parallel to one another extending around grooves 30a in the roller 30, and passing down through the open outboard bracket 32 to the CCR unit 33. Details of the redirect roller will be explained in connection with Figure 4 below.

The main bracket 43 of the placement head 25, (Figure 3) comprises a fabrication, having a horizontal top plate 44a angled top corner plate 44b, and a vertical back plate 45, welded with side gussets 46a, 46b. A pilot bore 47 is provided through the top corner plate 44b for registration on the wrist tooling plate 16. Two pairs of vertically-oriented ball bushings 48 are affixed to the vertical plate 45 of the main bracket 43, for guiding a vertical slide 49. The slide 49 has a pair of precision bars 50 affixed to the rear by blocks 51, the bars 50 being free to ride vertically in the ball bushings 48. The slide 49 is configured as a notched plate, having uniform thickness, and the lowermost slide edge 52 carries the presser member assembly 34, which basically comprises a compliant roller, able to adapt to a variety of work-surface contours.

Referring to Figure 4, the grooved redirect guide roller 30 is journalled on a tubular pin 53. The roller 30 is an assembly having a plurality of spaced single-groove rings 54, i.e. each having a thin annular flange 55 at each side, and the rings 54 are carried by ball bearings 56 on the tubular pin 53 so there will be virtually no drag on the tows 23. The tubular pin 53 has a head 57 at one end and has a transverse pin 58 captivating a compression spring 59 at the other end. The transverse pin 58 may be fitted with a ring 60 for ease of disassembly. Spacers 61 at each side of the roller 30 keep the roller centered and free of dragging on the side plates 41.

The independent anti-friction support of the grooved rings 54 permits the fibre tows 23 to move at independent rates across the roller 30 without drag occuring.

Both roller assemblies 38 shown in Figure 2 are identical, and each have pivot axes 62, 63 to permit swivelling of the assembly 38 in accordance with the force components of the tensioned fibre tows 23.

With reference to Figure 3, the axis 64 of the roller and pivot axis of the roller assembly 38 are, preferably, non-intersecting, to permit a caster-like movement.

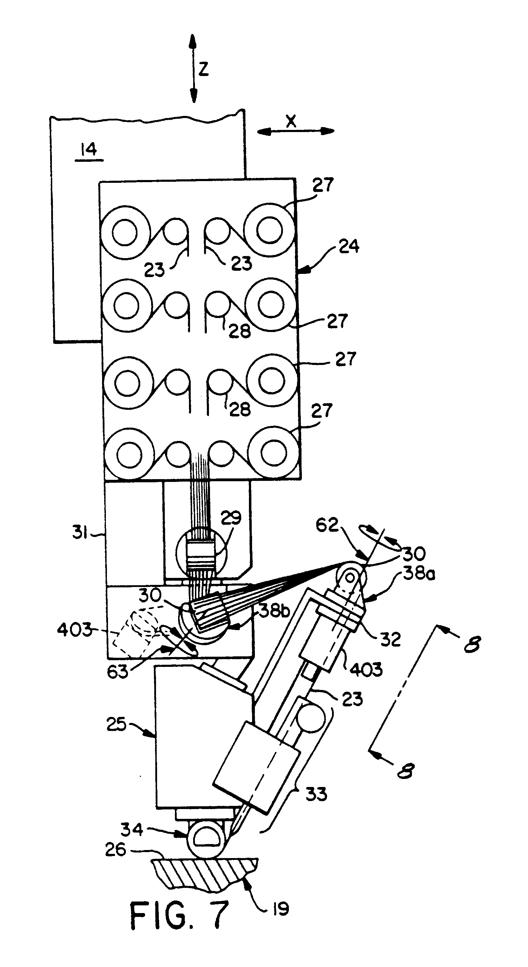

Figure 6 is a diagrammatic view of the redirect rollers 30, showing cooperation and caster-like movement as the fibre 23 are trained-around, and the outer fibres 23a, 23b (as well as intermediate fibres) are maintained under equal tension. T₁-T₂.

Referring to Figure 7, the passive roller assemblies 38 of Figure 2 have been replaced in the second embodiment with motorised roller assemblies 38a, 38b. Both roller assemblies are substantially identical, having swivel axes 62, 63 to permit swivelling of the assembly 38a, 38b in accordance with predetermined axis commands from the CNC 22 (see Figure 1).

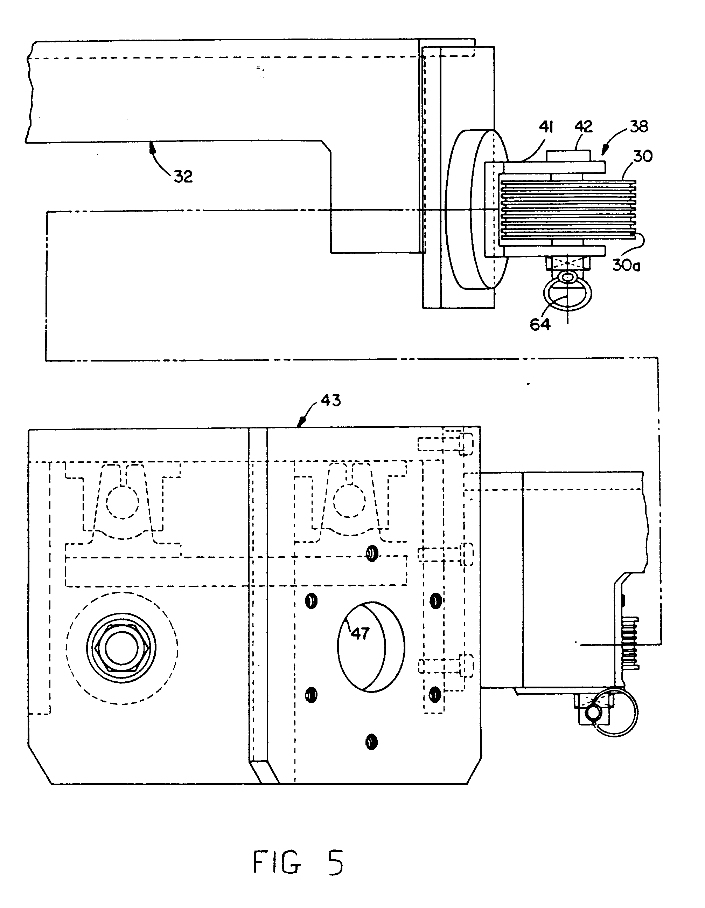

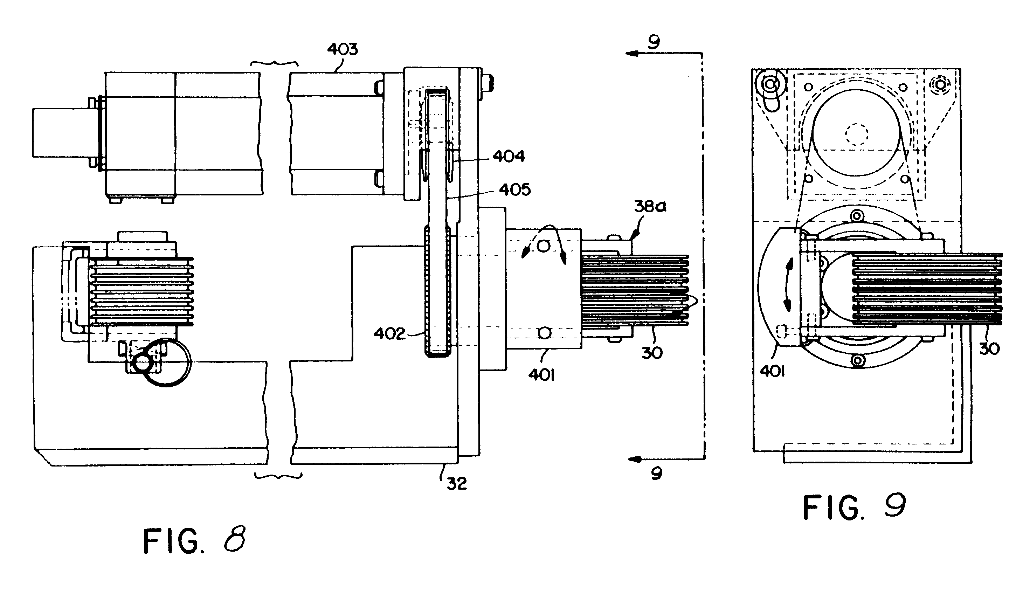

With reference to Figures 8 and 9, the assemby 38a is fitted with a balance counterweight 401 and a driven pulley 402. A servo motor 403 is carried by the outboard support bracket 32, and has a drive pulley 404 and belt 405 to provide positive controlled movement to the roller assembly 38a. The roller assembly 38b has the same drive elements (see Figure 7). The counterweight 401 may also be used with the passive system described in connection with Figure 2 to 6.

The diagrammatic view of Figure 7 shows cooperation between the redirect rollers 30 to maintain control of the fibres 23.

It will be appreciated that by those skilled in the art that the roller assemblies 38a, 38b may be roughly rotated to discrete positions as the head is moved, to closely approximate a path where the fibres 23 will not jump from the edge of the rollers 30, or alternatively, the roller assemblies 38a, 38b may be continuously moved under full servo control, to cooperate with each other as the head moves.

In some instances, it may be preferably to operate the system with only one powered redirect roller - for example assembly 38a on the head 25. In such a case, the creel-mounted assembly 38b would simply be mounted in the anti-friction bearing 7 and would swivel in a castor-like fashion in response to the directions of pull of the tension fibres 23.

The features disclosed in the foregoing description, or the following claims, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

## Claims

1. A fibre placement machine comprising a relatively stationary housing (14), a fibre supply device (24) on which a plurality of spools (27) of fibre (23) may be mounted supported by the housing (14), tensioning means (28) for maintaining tension in the fibres (23), a fibre placement head (25) for applying fibres to a workpiece surface (26), the fibre placement head (25) being carried by a manipulation wrist (15) extending from the housing (14) whereby the head may be manipulated through multi-spatial orientations; the machine comprising a redirect roller assembly (38) on the housing comprising a plurality of roller elements (30) rotatable about a first axis (64), and a redirect roller assembly on the head (14) comprising a plurality of roller elements rotatable about two axes (62, 63) characterised in that the roller elements on the housing are each carried by a roller base (39) on which the roller element is rotatable about said first axis (64), and a bearing member (37) provides rotary movement of said base (39) about a second axis (62, 63) transverse to said first axis (64).

2. A fibre placement machine according to Claim 1 wherein the roller elements of the head are each carried by a roller base (39) on which the roller element is rotatable about said first axis (64), and a bearing member (37) provides periphery movement of said base (39) about a second axis (62, 63) transverse to said first axis (64).

3. A fibre placement machine according to one of Claims 1 and 2 comprising means (22) for controlling the manipulator wrist.

4. A fibre placement machine according to any one of the preceding claims wherein said roller assemblies (38) are unpowered.

5. A fibre placement machine according to any one of Claims 1 to 3 comprising power means for driving at least one of the roller assemblies (38) with respect to one swivel axis.

6. A fibre placement machine according to Claim 5 wherein said power means is operative to drive the roller base (39) about its respective axis (62, 63).

7. A fibre placement machine according to one of Claims 5 and 6 wherein both roller assemblies (38a, 38b) are motorised.

## Patentansprüche

1. Auflegevorrichtung für Fasern, umfassend ein relativ ortsfestes Gehäuse (14), eine Faserzufuhrvorrichtung (24), auf der eine Anzahl von Spulen (27) mit Fasern (23) montiert werden können und die vom Gehäuse (14) getragen wird, Spannmittel (28) zum Aufrechterhalten der Spannung in den Fasern (23), einen Faserauflegekopf (25) zum Anbringen der Fasern auf einer Werkstückoberfläche (26), wobei der Faserauflegekopf (25) von einem Bedienungsgelenk (15) getragen wird, das sich vom Gehäuse (14) erstreckt, wodurch der Kopf in zahlreiche räumliche Orientierungen gebracht werden kann; wobei die Vorrichtung eine Umlenkrollenvorrichtung (38) auf dem Gehäuse aufweist, die eine Anzahl von Rollenelementen (30) umfaßt, die um eine erste Achse (64) drehbar sind, und eine Umlenkrollenanordnung auf dem Kopf (14), die eine Anzahl von um zwei Achsen (62, 63) drehbaren Rollenelementen umfaßt, dadurch gekennzeichnet, daß die Rollenelemente auf dem Gehäuse jeweils von einem Rollensockel (39) getragen werden, auf dem das Rollenelement um die besagte erste Achse (64) drehbar ist, und daß ein Lagerelement (37) eine Drehbewegung des besagten Sockels (39) um eine zweite Achse (62, 63) schafft, die quer zur ersten Achse (64) liegt.

2. Vorrichtung nach Anspruch 1, dadurch gekennzeichnet, daß die Rollenelemente auf dem Kopf jeweils von einem Rollensockel (39) getragen werden, auf dem das Rollenelement um die besagte erste Achse (64) drehbar ist, wobei ein Lagerelement (37) eine entlang des Umfangs gerichtete Bewegung des besagten Sockels (39) um eine zweite Achse (62, 63) quer zu der besagten ersten Achse (64) schafft.

3. Vorrichtung nach Anspruch 1 oder 2, gekennzeichnet durch Mittel (22) zur Steuerung des Bedienungsgelenks.

4. Vorrichtung nach einem der vorangehenden Ansprüche, dadurch gekennzeichnet, daß die besagten Rollenvorrichtungen (38) antriebslos sind.

5. Vorrichtung nach einem der Ansprüche 1 bis 3, gekennzeichnet durch Antriebsmittel, um wenigstens eine der Rollenvorrichtungen (38) in Bezug auf eine Schwenkachse anzutreiben.

6. Vorrichtung nach Anspruch 5, dadurch gekennzeichnet, daß das besagte Antriebsmittel so wirkt, daß es den Rollensockel (39) um seine jeweilige Achse (62, 63) antreibt.

7. Vorrichtung nach einem der Ansprüche 5 oder 6, dadurch gekennzeichnet, daß beide Rollenvorrichtungen (38a, 38b) angetrieben sind.

## Revendications

1. Machine d'application de fibres comprenant un logement relativement fixe (14), un dispositif d'alimentation de fibres (24) sur lequel peuvent être montées un certain nombre de bobines (27) de fibres (23), supporté dans le logement (14), des moyens tendeurs (28) pour maintenir une tension dans les fibres (23), une tête d'application de fibres (25) pour appliquer les fibres sur la surface (26) d'une pièce, la tête d'application de fibres (25) étant supportée par un poignet manipulateur (15) s'étendant à partir du logement (14), la tête pouvant être ainsi manipulée selon des orientations multispatiales; la machine comprenant un ensemble de rouleaux de renvoi (38) sur le logement, comprenant une pluralité de rouleaux élémentaires (30) pouvant tourner autour d'un premier axe (64), et un ensemble de rouleaux de renvoi sur la tête (14) comprenant une pluralité de rouleaux élémentaires pouvant tourner autour de deux axes (62, 63), caractérisée en ce que les rouleaux élémentaires du logement sont chacun supportés par une base (39) sur laquelle chaque rouleau élémentaire peut tourner dudit premier axe (64), et un élément de support (37) assure le mouvement en rotation de ladite base (39) autour d'un second axe (62, 63) transversal audit premier axe (64).

2. Machine d'application de fibres selon la revendication 1, dans laquelle les rouleaux élémentaires de la tête sont chacun supportés par une base (39) sur laquelle chaque rouleau élémentaire peut tourner autour dudit premier axe (64), et un élément de support (37) assure le mouvement périphérique de ladite base (39) autour d'un second axe (62, 63) transversal audit premier axe (64).

3. Machine d'application de fibres selon la revendication 1 ou 2, comprenant des moyens (22) pour commander le poignet manipulateur.

4. Machine d'application de fibres selon l'une quelconque des revendications précédentes, dans laquelle lesdits ensembles de rouleaux (38) ne sont pas motorisés.

5. Machine d'application de fibres selon l'une quelconque des revendications 1 à 3, comprenant des moyens motorisés pour entraîner au moins l'un des ensembles de rouleaux (38) par rapport à un axe de pivotement.

6. Machine d'application de fibres selon la revendication 5, dans laquelle lesdits moyens motorisés sont aptes à entraîner la base de rouleau (39) autour de son axe respectif (62, 63).

7. Machine d'application de fibres selon l'une des revendications 5 et 6, dans laquelle les deux ensembles de rouleaux (38a, 38b) sont motorisés.
